# FASCICULE DE BREVET EUROPEEN

(11) **EP 4 137 706 B1**
(45) Date de publication et mention de la délivrance du brevet: **15.05.2024**
(21) Numéro de dépôt: 22187558.6
(22) Date de dépôt: 28.07.2022
(51) Int. Cl.: F16B 7/04, F16B 21/07, F16B 21/04

(54) **DISPOSITIF ET PROCÉDÉ D'ASSEMBLAGE DE TUBES**
VORRICHTUNG UND VERFAHREN ZUM MONTIEREN VON ROHREN
DEVICE AND METHOD FOR ASSEMBLING TUBES

(30) Priorité: 18.08.2021 FR 2108758
(43) Date de publication de la demande: 22.02.2023
(73) Titulaire: G-Tech, 38600 FONTAINE (FR)
(72) Inventeur: ORTUNO, Jean-Marc, 38140 IZEUX (FR); SIX, Olivier, 38180 SEYSSINS (FR)
(74) Mandataire: Hautier IP

(56) Documents cités:
- FR-A1- 3 067 765
- GB-A- 107 151
- GB-A- 2 319 724
- JP-A- 2007 209 418
- US-A1- 2003 231 927

## Description

### DOMAINE TECHNIQUE

La présente invention concerne le domaine de l'assemblage de tubes selon une direction longitudinale. Elle trouve pour application particulièrement avantageuse l'assemblage de tubes en carbone, aluminium ou autres matériaux. Une application particulière de l'invention concerne l'assemblage de brins pour former un bâton pliable pour de la marche, de la randonnée ou de la course en nature, habituellement désignée « trail running ».

### ETAT DE LA TECHNIQUE

Pour assembler et désassembler deux tubes en carbone bout à bout de façon répétée, il est généralement nécessaire d'utiliser des embouts de type mâle/femelle, rapportés aux extrémités des tubes. Cela permet d'éviter une fatigue excessive des extrémités des tubes en carbone, pouvant conduire à la rupture de ces extrémités. Cela facilite en outre l'assemblage ou le désassemblage des tubes, en simplifiant le verrouillage et le déverrouillage par exemple.

Le document FR3067765 divulgue un dispositif de blocage de deux tubes, dans le sens longitudinal des tubes. Ce dispositif de blocage comprend un premier manchon à l'extrémité du premier tube et un deuxième manchon à l'extrémité du deuxième tube. Les premier et deuxième manchons sont destinés à coopérer par emboîtement dans une position d'engagement, et sont reliés par un câble permettant de retenir les deux tubes dans une position de désengagement. Un ressort longitudinal fixé à une première extrémité du câble et prenant appui sur le premier manchon permet le désengagement et facilite la mise en place des manchons en position d'engagement. Le premier manchon est monté coulissant le long du câble. Le deuxième manchon comprend une pièce de retenue fixée à la deuxième extrémité du câble. Une bride déformable attachée à l'un des manchons et coopérant avec l'autre manchon permet de verrouiller et de déverrouiller le dispositif en position d'engagement. Chaque manchon est typiquement collé ou serti à l'extrémité du tube correspondant.

Pour offrir une tenue suffisante aux vibrations lors de l'utilisation du dispositif de blocage, la pièce de retenue est maintenue sur le deuxième manchon à l'aide de frein filet.

Dans une opération de maintenance, en cas de casse de l'un des tubes par exemple si l'extrémité du bâton se coince entre deux rochers, la désolidarisation des deux tubes se fait en dévissant la pièce de retenue par rapport au deuxième manchon. Le deuxième tube équipé du deuxième manchon peut ainsi être retiré et remplacé ou réparé.

Un inconvénient de ce dispositif est qu'il est difficilement démontable. Le frein filet rend la désolidarisation délicate. En fonction du vieillissement du dispositif et des cycles de température auquel il a été soumis, la force nécessaire au déblocage du frein filet peut être supérieure à la résistance en torsion du tube, notamment lorsqu'il s'agit d'un tube en carbone. Il y a alors un risque non négligeable de rupture du tube lors de l'opération de maintenance, même si cette dernière est effectuée par un service après-vente (SAV). Un autre inconvénient est l'impossibilité d'un démontage répété -soit monter et démonter les tubes à plusieurs reprises-, par exemple pour changer les accessoires (poignée, pointe,...) ou la taille de bâton.

Il existe donc un besoin consistant à fournir un dispositif d'assemblage de tubes permettant un assemblage fiable et qui soit facilement démontable. Un objet de la présente invention est de répondre à ce besoin.

Un autre objet de la présente invention est de proposer un procédé de démontage et/ou montage de deux tubes équipés d'un tel dispositif d'assemblage.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, un premier aspect de l'invention concerne un dispositif d'assemblage comprenant :
- un premier manchon destiné à équiper un premier tube, et un deuxième manchon destiné à équiper un deuxième tube, lesdits premier et deuxième manchons étant configurés pour coopérer par emboitement selon un axe longitudinal,
- une bride, de préférence déformable manuellement selon une direction transverse à l'axe longitudinal, montée sur l'un des premier et deuxième manchons, et configurée pour
   - retenir l'autre des premier et deuxième manchons en translation selon l'axe longitudinal, dans une position d'assemblage,
   - libérer l'autre des premier et deuxième manchons dans une position de désassemblage, ladite position de désassemblage étant obtenue en exerçant, de préférence manuellement, un effort ou une pression transverse sur un pourtour de la bride déformable,
- un moyen élastique prenant appui contre le premier manchon et configuré pour exercer un effort de rappel selon l'axe longitudinal, et
- un câble monté coulissant vis-à-vis du premier manchon et présentant une première extrémité retenue par ledit moyen élastique, ledit câble présentant une deuxième extrémité destinée à être retenue par un moyen de retenue du deuxième manchon.

Avantageusement, la deuxième extrémité du câble et le moyen de retenue présentent des formes complémentaires de sorte que :
- dans une position de montage, la deuxième extrémité du câble est en prise avec le moyen de retenue, le moyen de retenue formant une butée pour la deuxième extrémité selon l'axe longitudinal permettant au moyen élastique d'exercer ledit effort de rappel, de sorte que les premier et deuxième manchons soient liés l'un à l'autre par le câble,
- dans une position de démontage, la deuxième extrémité du câble est désengagée du moyen de retenue, de sorte que les premier et deuxième manchons ne soient plus liés l'un à l'autre par le câble.

Avantageusement, l'engagement et le désengagement dans les positions respectives de montage et de démontage peuvent se faire manuellement.

La bride permet de fiabiliser l'assemblage dans la position d'assemblage, en évitant que les manchons ne se déboitent. Ainsi, en l'absence d'efforts volontairement appliqués par l'utilisateur sur la bride, les deux manchons sont en prise ce qui empêche la désolidarisation des deux manchons ou des deux tubes par coulissement selon l'axe longitudinal. La bride verrouille ainsi l'assemblage des manchons.

Le moyen élastique est typiquement configuré pour ramener la deuxième extrémité vers l'intérieur du premier tube de sorte à exercer un effort de rappel du premier tube vers le deuxième tube. Cela contribue à conserver l'emboitement des tubes.

La conformation de la deuxième extrémité du câble et du moyen de retenue permet de faciliter le démontage et/ou le montage du dispositif d'assemblage. Les formes complémentaires sont typiquement choisies de façon à permettre un engagement et un désengagement manuel de la deuxième extrémité vis-à-vis du moyen de retenue.

Selon un exemple, la deuxième extrémité du câble comprend un élément en saillie selon une direction transverse à l'axe longitudinal, ledit élément étant destiné à coopérer avec le moyen de retenue, et le moyen de retenue du deuxième manchon comprend un passage pour l'élément en saillie, et une gorge de retenue configurée pour retenir ledit élément. L'élément en saillie présente ainsi une forme complémentaire à celle de la gorge de retenue, dans les positions d'assemblage et de désassemblage. La forme de l'élément en saillie est en outre complémentaire de celle du passage de l'élément de retenue, dans la position de démontage.

Quelle que soit la position d'assemblage ou de désassemblage, les premier et deuxième manchons sont ainsi solidaires l'un de l'autre par l'intermédiaire du câble lorsque l'élément en saillie de la deuxième extrémité du câble est engagé dans la gorge de retenue. Avantageusement, la deuxième extrémité du câble peut être facilement sortie du moyen de retenue, par le passage ménagé au sein du moyen de retenue. Cela permet de désolidariser les premier et deuxième manchons, qui ne sont dès lors plus liés par le câble.

Selon un exemple, après que l'élément en saillie soit passé par le passage du moyen de retenue, une rotation de l'élément en saillie autour de l'axe longitudinal, typiquement d'un quart de tour, permet de présenter l'élément en saillie face à la gorge de retenue. L'engagement dans la gorge de retenue est assisté par la force de rappel du moyen élastique fixé à la première extrémité du câble. L'élément en saillie est ainsi maintenu dans la gorge de retenue, et les premier et deuxième manchons sont solidarisés. Cela correspond typiquement au montage des premier et deuxième manchons.

Le démontage se fait typiquement à l'inverse du montage, par translation de l'élément en saillie contre la force de rappel du moyen élastique de façon à le sortir de la gorge de retenue, puis par rotation d'un quart de tour de l'élément en saillie de façon à le présenter face au passage du moyen de retenue. La deuxième extrémité du câble peut dès lors sortir par le passage du moyen de retenue, de façon à désolidariser les premier et deuxième manchons dans la position dite de démontage.

Un tel dispositif comprenant une extrémité de câble conformée de façon à coopérer avec un moyen de retenue comprenant un passage et une gorge de retenue, permet avantageusement d'éviter de recourir à une pièce de retenue vissée dans le deuxième manchon. Le démontage et la séparation de deux tubes équipés de ce dispositif d'assemblage sont facilités. Le montage et/ou le démontage des tubes peut se faire manuellement. En cas de casse d'un tube, par exemple un brin en carbone d'un bâton de randonnée, l'opération de maintenance peut être effectuée directement par l'utilisateur du bâton. L'utilisateur peut ainsi démonter le tube cassé et monter un nouveau tube en lieu et place du tube cassé, sans qu'il soit nécessaire de faire intervenir un tiers. Avantageusement, l'utilisateur peut facilement démonter un ancien tube et monter un nouveau tube, par exemple afin de personnaliser son bâton.

Dans le cadre du développement de la présente invention, d'autres solutions permettant de faciliter le démontage ont été envisagées avant d'être abandonnées. Une solution non retenue dans le cadre de la présente invention consiste à utiliser une goupille de retenue pour maintenir les deux manchons. Cette goupille s'insère transversalement et nécessite un perçage de l'un des tubes. Cela fragilise le tube, en particulier lorsque celui-ci est à base de carbone. Une autre solution non retenue dans le cadre de la présente invention consiste à ajuster ou resserrer le pas de vis de façon à supprimer ou limiter l'usage de frein filet. Un pas de vis resserré présente cependant un jeu de dilation plus faible. Il est ainsi plus sensible aux variations thermiques. Ces solutions alternatives n'ont donc pas été retenues.

Selon un exemple, la deuxième extrémité du câble peut présenter une forme typique en baïonnette, avec deux ergots de part et d'autre de l'axe longitudinal, et le passage du moyen de retenue peut présenter une forme de fente, complémentaire aux ergots de la baïonnette, et une gorge de retenue décalée dudit passage et présentant également une forme complémentaire aux ergots de la baïonnette. La deuxième extrémité du câble est ainsi typiquement insérée par la fente dans le moyen de retenue, puis, par une rotation d'un quart de tour par exemple, la deuxième extrémité vient se loger dans la gorge de retenue pour y être retenue.

Un aspect particulier de l'invention concerne un bâton de randonnée équipé d'un tel dispositif d'assemblage. Un tel bâton peut comprendre un premier tube, un deuxième tube et un premier dispositif d'assemblage selon le premier aspect de l'invention, entre les premier et deuxième tubes, et de façon optionnelle et préférée un troisième tube et un deuxième dispositif d'assemblage selon le premier aspect de l'invention, entre les deuxième et troisième tubes. Selon une possibilité, le bâton peut comprendre une pluralité de tubes assemblés les uns aux autres via des dispositifs d'assemblage selon le premier aspect de l'invention.

Un autre aspect de l'invention concerne un procédé de démontage d'un dispositif d'assemblage selon le premier aspect de l'invention, comprenant :
- Un effort, tel qu'une pression transverse à l'axe longitudinal, sur le pourtour de la bride, la bride étant de préférence déformable manuellement,
- Une traction selon l'axe longitudinal pour déboiter les premier et deuxième manchons, l'élément en saillie étant retenu dans la gorge de retenue,
- Un blocage du câble vis-à-vis du deuxième manchon,
- Une translation du deuxième manchon en direction du premier manchon, le long du câble, de sorte à désengager l'élément en saillie de la gorge de retenue,
- Une rotation du deuxième manchon relativement au câble, de sorte à aligner l'élément en saillie avec le passage du moyen de retenue,
- Une translation du deuxième manchon dans une direction opposée au premier manchon, le long du câble, de sorte à désengager l'élément en saillie du moyen de retenue et à désolidariser les premier et deuxième manchons.

Un autre aspect de l'invention concerne également un procédé de montage du dispositif d'assemblage, comprenant :
- Une traction sur la deuxième extrémité du câble et un blocage du câble contre le premier manchon,
- Une mise en regard du deuxième manchon avec la deuxième extrémité du câble,
- Une translation du deuxième manchon en direction du premier manchon, le long du câble, de sorte à engager l'élément en saillie dans le passage du moyen de retenue,
- Une rotation du deuxième manchon relativement au câble, de sorte à aligner l'élément en saillie avec la gorge de retenue,
- Un déblocage du câble,
- Un emboitement selon l'axe longitudinal des premier et deuxième manchons, l'élément en saillie étant retenu dans la gorge de retenue,
- Un verrouillage de la bride.

### BREVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :
La figure 1 illustre en perspective un moyen de retenue selon un mode de réalisation de la présente invention.
Les figures 2A à 2C illustrent différentes coupes transverses d'un moyen de retenue selon un mode de réalisation de la présente invention.
La figure 3 illustre une extrémité de câble comprenant un élément en saillie et une partie de guidage selon un mode de réalisation de la présente invention.
La figure 4 illustre en coupe transverse une extrémité de câble retenue dans un moyen de retenue selon un mode de réalisation de la présente invention.
La figure 5 illustre en perspective l'extrémité de câble illustrée à la figure 3, retenue dans le moyen de retenue illustré à la figure 1, selon un mode de réalisation de la présente invention.
La figure 6 illustre en vue éclatée un dispositif d'assemblage selon un mode de réalisation de la présente invention.
La figure 7 illustre en coupe transverse un dispositif d'assemblage dans une position de démontage, selon un mode de réalisation de la présente invention.
La figure 8 illustre en coupe transverse un dispositif d'assemblage dans une position de montage, selon un mode de réalisation de la présente invention.
La figure 9 illustre un bâton de randonnée équipé de dispositifs d'assemblage, selon un mode de réalisation de la présente invention.
La figure 10 illustre en vue éclatée un bâton de randonnée équipé de dispositifs d'assemblage, selon un mode de réalisation de la présente invention.
Les figures 11A à 11C illustrent différentes vues détaillées de deux tubes d'un bâton de randonnée assemblés avec un dispositif d'assemblage selon un mode de réalisation de la présente invention.
La figure 12 illustre une étape de blocage manuel du câble, selon un mode de réalisation du procédé de démontage de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions des différents éléments (câble, extrémités, moyen de retenue...) peuvent varier vis-à-vis des proportions illustrées sur les schémas de principe.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, la deuxième extrémité comprend une partie de guidage distale vis-à-vis de la première extrémité, ladite partie de guidage étant configurée pour guider la deuxième extrémité au travers du passage du moyen de retenue. Cela permet de faciliter l'introduction de la deuxième extrémité dans le passage du moyen de retenue.

Selon un exemple, l'élément en saillie est configuré pour passer dans le passage par translation selon l'axe longitudinal, et pour être retenu dans la gorge de retenue par rotation, de préférence par rotation d'un quart de tour, autour de l'axe longitudinal. Un tel mouvement de translation-rotation est simple à effectuer, et assure un engagement / désengagement de type fixation à baïonnette.

Selon un exemple, l'élément en saillie présente deux ergots cylindriques de part et d'autre du câble, et la gorge de retenue présente une forme complémentaire auxdits ergots. Cela permet de mieux répartir les efforts mécaniques. Les deux ergots sont de préférence symétriques vis-à-vis de l'axe longitudinal. Cela permet d'équilibrer les efforts mécaniques. Cela facilite également l'engagement dans la gorge de retenue, puisque deux positions à 180° l'une de l'autre autour de l'axe longitudinal peuvent permettre l'engagement.

Selon un exemple, l'élément en saillie est rapporté sur le câble.

Selon un exemple, l'effort de rappel du moyen élastique permet de retenir l'élément en saillie contre le fond de la gorge.

Selon un exemple, le passage du moyen de retenue est centré vis-à-vis du deuxième manchon, en projection dans un plan transverse à l'axe longitudinal.

Selon un exemple, le deuxième manchon comprend un passage longitudinal configuré pour laisser passer l'élément en saille, ledit passage longitudinal débouchant sur le passage du moyen de retenue, et traversant le deuxième manchon longitudinalement de part en part. Le deuxième manchon est ainsi monté coulissant vis-à-vis du câble et de la deuxième extrémité. Le moyen de retenue et le deuxième manchon sont différenciés. Cela évite un usinage complexe du deuxième manchon pour intégrer les formes du passage et la gorge.

Selon un exemple, le moyen de retenue est un embout à base de plastique rapporté sur le deuxième manchon sur une partie de liaison du deuxième manchon. L'embout peut être en ABS. Il peut être moulé. Des formes complexes de gorge et de passage peuvent être obtenues sans usinage complexe. Cela réduit les coûts de production du dispositif. Cela limite en outre le nombre de pièces métalliques aux seuls premier et deuxième manchons. Le coût du dispositif d'assemblage est encore réduit. Alternativement, l'embout est à base de métal ou d'un autre matériau.

Selon un exemple, le moyen de retenue comprend au moins un bord présentant une pente de guidage configurée pour guider l'élément en saillie au fond de la gorge, de préférence pour guider l'élément en saillie au fond de la gorge lorsque l'élément élastique exerce l'effort de rappel. Cela facilite la mise en place de l'élément en saillie dans la gorge de retenue. En outre, en cas de tressautement de l'élément en saillie dû à des vibrations ou des chocs par exemple, l'élément en saillie se replace automatiquement au fond de la gorge. Ce replacement peut être avantageusement assisté par le moyen élastique. Ainsi, l'effort de rappel du moyen élastique, en conjonction avec le profil de pente, assure une mise en place fiable de l'élément en saillie au fond de la gorge. Ainsi, même sous l'effet de vibrations ou de chocs subis par le dispositif, l'élément de retenue est maintenu par le moyen élastique dans la position de montage, ce qui préserve l'emboîtement des deux tubes.

Selon un exemple, la gorge de retenue présente une hauteur hg supérieure à au moins la moitié d'une hauteur hs de l'élément en saille, les hauteurs hg et hs étant prises selon l'axe longitudinal. Cela permet d'éviter un désengagement intempestif de l'élément en saillie, en cas de tressautement de l'élément en saillie dû à des vibrations par exemple.

Selon un exemple, le moyen élastique est un ressort tronconique dont la base de plus grande dimension, en section selon un plan transverse à l'axe longitudinal, prend appui sur le premier manchon. Le ressort tronconique permet d'obtenir une force de rappel progressive. Cela limite ou évite le risque de rupture fragile d'un élément, pouvant être induit par un choc brusque lors de l'engagement de l'élément en saillie et/ou lors de l'emboitement des premier et deuxième manchons.

Selon un exemple, les premier et deuxième tubes sont à base de carbone. Selon un autre exemple, les premier et deuxième tubes sont à base d'un autre matériau composite. Selon un autre exemple, les premier et deuxième tubes sont à base de métal, typiquement à base d'aluminium. Selon un autre exemple, les premier et deuxième tubes sont à base de matériaux différents l'un de l'autre, par exemple l'un des tubes est à base de carbone et l'autre tube est à base d'aluminium.

Selon un exemple, l'effort sur la bride déformable manuellement est un pincement radial exercé manuellement par l'utilisateur. Typiquement ce pincement est exercé par une main de l'utilisateur, entre un pouce et un autre doigt de cette main.

Selon un exemple, le blocage du câble est effectué manuellement, en tenant le premier manchon et en pinçant le câble contre un bord du premier manchon, avec un pouce. Cela évite de recourir à un outil. Cela facilite l'opération de montage ou de démontage.

Selon un exemple, la rotation est effectuée sur un quart de tour.

Les étapes du procédé de démontage peuvent être typiquement inversées de façon à obtenir un procédé de montage.

Selon un exemple, toutes les étapes du procédé de montage ou de démontage sont effectuées manuellement, c'est-à-dire sans outil.

Sauf incompatibilité, il est entendu que l'ensemble des caractéristiques optionnelles ci-dessus peuvent être combinées de façon à former un mode de réalisation qui n'est pas nécessairement illustré ou décrit. Un tel mode de réalisation n'est évidemment pas exclu de l'invention. Les caractéristiques d'un aspect de l'invention, par exemple le dispositif, le procédé ou le bâton, peuvent être adaptées mutatis mutandis à un autre aspect de l'invention.

Il est précisé que, dans le cadre de la présente invention, les termes « sur », « surmonte », « recouvre », « sous-jacent », en « vis-à-vis » et leurs équivalents ne signifient pas forcément « au contact de ».

Une couche peut par ailleurs être composée de plusieurs sous-couches d'un même matériau ou de matériaux différents.

On entend par un élément, « à base » d'un matériau A, un élément comprenant ce matériau A uniquement ou ce matériau A et éventuellement d'autres matériaux, par exemple des éléments d'alliage. Ainsi, un tube à base de carbone s'entend typiquement d'un tube à base de fibres de carbone et d'un liant.

Plusieurs modes de réalisation de l'invention mettant en oeuvre des étapes successives du procédé de montage/démontage sont décrits ci-après. Sauf mention explicite, l'adjectif « successif » n'implique pas nécessairement, même si cela est généralement préféré, que les étapes se suivent immédiatement, des étapes intermédiaires pouvant les séparer.

Par ailleurs, le terme « étape » s'entend de la réalisation d'une partie du procédé, et peut désigner un ensemble de sous-étapes.

Par ailleurs, le terme « étape » ne signifie pas obligatoirement que les actions menées durant une étape soient simultanées ou immédiatement successives. Certaines actions d'une première étape peuvent notamment être suivies d'actions liées à une étape différente, et d'autres actions de la première étape peuvent être reprises ensuite. Ainsi, le terme étape ne s'entend pas forcément d'actions unitaires et inséparables dans le temps et dans l'enchaînement des phases du procédé.

Un repère de préférence orthonormé, comprenant les axes x, y, z est représenté sur les figures annexées. Lorsqu'un seul repère est représenté sur une même planche de figures, ce repère s'applique à toutes les figures de cette planche.

Dans la présente demande de brevet, l'axe longitudinal est orienté selon l'axe z. Les termes relatifs « sur », « surmonte », « sous », « sous-jacent », « intercalé » se réfèrent à des positions prises selon la direction z.

Les termes « longitudinal », « vertical », « verticalement » se réfèrent à une direction selon z. Les termes « horizontal », « horizontalement », « latéral », « latéralement » se réfèrent à une direction dans le plan xy.

Dans le cadre de la présente invention, un tube est un élément allongé, creux de préférence sur au moins la moitié de sa longueur. Il présente une section transverse de préférence circulaire. D'autres formes en section transverses sont néanmoins parfaitement envisageables.

Les termes « tube » et « brin » sont employés en synonymes. Un « moyen élastique » peut être un « élément élastique ». Un « moyen de retenue » peut être un « élément de retenue ».

Une application particulière de l'invention concerne un bâton de randonnée. On entend par bâton de randonnée plus généralement un bâton pour la marche à pied, pour la course en nature, pour le ski de randonnée ou pour toute pratique recourant à un bâton. La terminologie générique « bâton de randonnée » désigne ainsi différents types de bâtons, qui peuvent être plus spécifiquement dédiés à la course, à la marche ou au ski. Un bâton de ski de randonnée pourra notamment présenter des sections de tubes supérieures à celles d'un bâton de course, pour rigidifier le bâton (l'effort d'appui sur le bâton étant typiquement plus important lors de la pratique du ski que lors de la pratique de la course).

Le dispositif d'assemblage selon la présente invention peut avantageusement présenter différentes positions. Lorsque les deux manchons sont emboités, on parlera de position d'assemblage. Lorsque les deux manchons sont déboités, mais qu'ils sont toujours solidaires l'un de l'autre via le câble, l'élément en saillie étant engagé dans la gorge de retenue, on parlera de position de désassemblage ou de position de montage. Lorsque les deux manchons sont déboités, et qu'ils ne sont plus solidaires l'un de l'autre via le câble, l'élément en saillie étant désengagé du moyen de retenue, on parlera de position de démontage. Dans cette dernière position, les manchons sont détachés l'un de l'autre, et ne sont plus liés par le câble. Le dispositif d'assemblage selon la présente invention fournit ainsi un manchon amovible ou détachable. Les positions de désassemblage et de montage peuvent être vues comme une seule et même position intermédiaire du dispositif, entre la position assemblée et la position démontée. La position de montage peut être vue plus spécifiquement comme une position résultant d'une action de montage de l'extrémité dans le moyen de retenue. La position de désassemblage peut être vue plus spécifiquement comme une position résultant d'une action de déboîtement des manchons.

Les mouvements de translation et de rotation des manchons et du câble sont des mouvements relatifs. Ainsi, en fonction du référentiel choisi, une translation du premier manchon en direction du deuxième manchon peut être vue comme une translation du deuxième manchon en direction du premier manchon, ou comme une translation de chacun des manchons en direction l'un de l'autre. De même, une rotation du deuxième manchon relativement au câble s'entend d'une rotation relative du câble et du deuxième manchon qui peut être vue, en fonction du référentiel choisi, comme une rotation du câble relativement au deuxième manchon.

Une application particulièrement avantageuse de la présente invention concerne les bâtons de randonnée pliables, en particulier les bâtons en carbone. Les brins peuvent être déboités les uns des autres et repliés les uns sur les autres de façon à réduire l'encombrement du bâton lorsque celui-ci n'est pas utilisé. Pour remplacer un brin, par exemple en cas de casse ou pour une personnalisation du bâton, l'utilisateur peut avantageusement le faire lui-même facilement, grâce au dispositif d'assemblage selon la présente invention.

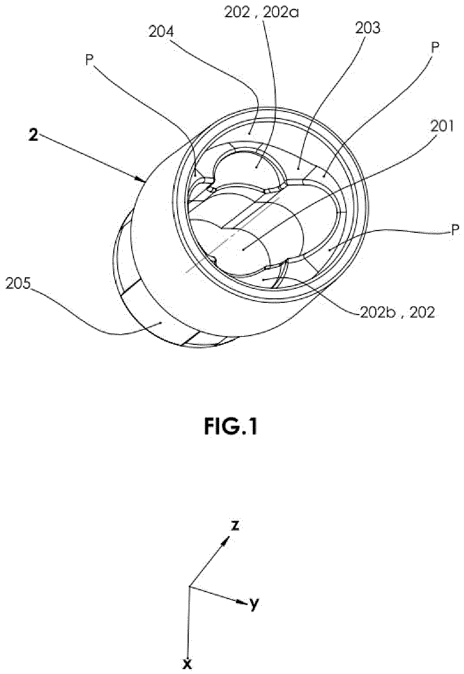

La figure 1 illustre un moyen de retenue sous forme d'embout 2. Cet embout 2 comprend typiquement un passage 201, ici sous forme de fente, traversant l'embout 2 de part en part selon l'axe longitudinal z. Cet embout 2 comprend également une gorge 202, configurée pour accueillir un élément en saillie. Dans cet exemple, la gorge 202 est orientée à 90° de la fente, dans le plan xy. La gorge 202 est en partie superposée à la fente 201. Elle présente ainsi une partie 202a d'un côté de la fente, et une partie 202b de l'autre côté de la fente 201. D'autres configurations de gorge sont envisageables. Selon un exemple non illustré, le passage 201 est configuré pour laisser passer un élément en saillie sous forme de crochet, et la gorge ne comprend qu'une partie, par exemple la partie 202a, destinée à accueillir le crochet.

Une gorge 202 symétrique facilite l'engagement de l'élément en saillie, puisque celui-ci peut être présenté en regard de la gorge par rotation d'un quart de tour dans le plan xy, selon une rotation horaire ou antihoraire. Par ailleurs la gorge 202 symétrique permet de mieux répartir un effort de traction selon z.

La gorge 202 forme un creux flanqué de bords 203. Les bords 203 peuvent former une bague cerclant une paroi 204 interne de l'embout 2, comme illustré à la figure 1. Ils peuvent être continus ou discontinus le long de la paroi 204. Les bords 203 présentent de préférence une pente P descendante en direction de la gorge 202. Cela permet de guider et de faciliter la mise en place de l'élément en saillie dans la gorge 202.

L'embout 2 est typiquement prévu pour être reporté sur un manchon en métal. Une partie 205 de l'embout peut ainsi être prévue pour coopérer par emboitement avec le manchon. L'embout 2 est de préférence en matière plastique, par exemple à base d'ABS (acrylonitrile butadiène styrène). Cela permet de limiter le coût du moyen de retenue. Cela permet en outre de former l'embout 2 directement par moulage, sans qu'il soit nécessaire de procéder à différentes étapes d'usinage pour former le passage et/ou la gorge et/ou la pente. D'autres procédés de formation de l'embout peuvent être employés, par exemple un procédé d'impression 3D.

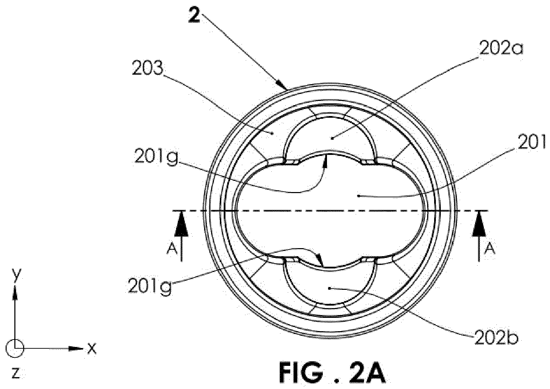

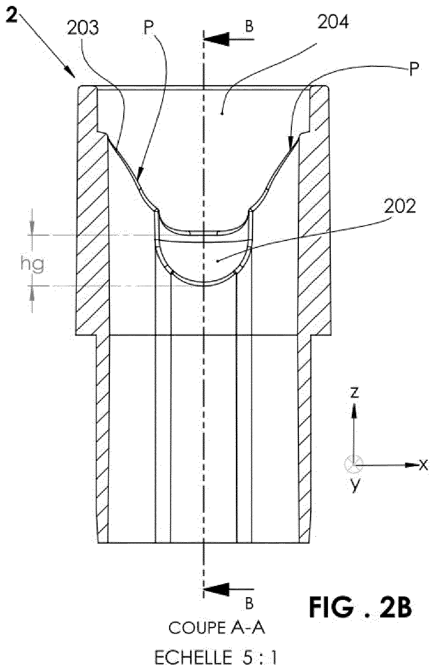

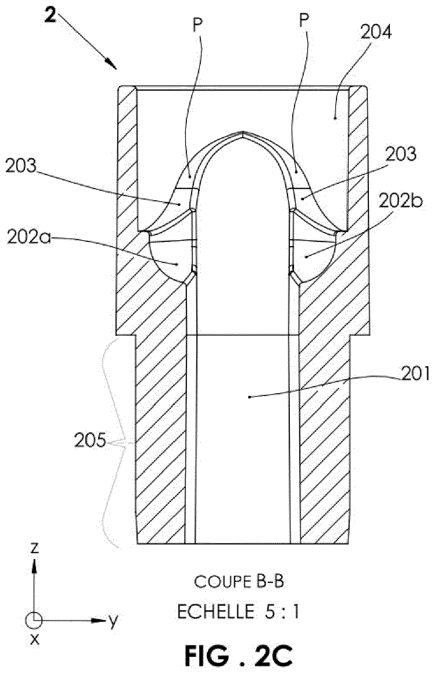

Les figures 2A à 2C illustrent l'embout 2 selon différentes coupes transverses. La figure 2A est une coupe dans le plan xy sur laquelle est visible la fente 201, la gorge 202a, 202b, la bague 203. La fente 201 peut présenter une partie de guidage 201g, pour faciliter le guidage de l'extrémité du câble équipée de l'élément en saillie. Le diamètre externe de l'embout 2 peut être compris entre 5 mm et 20 mm, typiquement de l'ordre de 10mm. La figure 2B est une coupe dans le plan xz sur laquelle est visible le passage 201, la gorge 202, les bords 203. La hauteur hg de la gorge 202 peut être comprise entre 1 mm et 5 mm, par exemple de l'ordre de 2mm. La hauteur hg est avantageusement choisie de façon à présenter un bon compromis entre une hauteur suffisante pour éviter un désengagement intempestif de l'élément en saillie en cours d'utilisation, lorsque le dispositif est assemblé, et une hauteur acceptable pour permettre une extraction facile de l'élément en saillie lors du démontage du dispositif d'assemblage. La pente P des bords 203 peut être comprise entre 30° et 65°, par exemple de l'ordre de 55°. La figure 2C est une coupe dans le plan yz sur laquelle est visible le passage 201, les deux parties 202a, 202b de la gorge 202, les bords 203. La conformation du passage 201, de la gorge 202 et des bords 203 est de préférence choisie de façon à faciliter l'introduction de l'élément en saillie et de le guider jusqu'à sa mise en place dans le fond de la gorge.

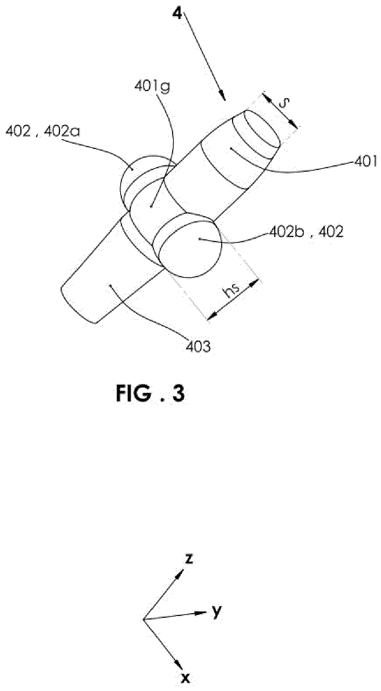

La figure 3 illustre une extrémité 4 de câble comprenant un élément en saillie 402 et une partie de guidage 401, 401g. L'élément en saillie comprend ici deux parties 402a, 402b de part et d'autre de l'axe longitudinal z. Ces parties 402a, 402b peuvent se présenter sous forme de demi-sphères, comme illustré sur la figure 3. En projection dans le plan xy, l'extrémité 4 présente typiquement une forme complémentaire à celle de la fente 201.

De façon optionnelle, l'extrémité 4 peut comprendre une partie de guidage 401 et/ou 401g. La partie de guidage 401 présente de préférence une section S réduite en partie sommitale. Elle est par exemple tronconique. Cela permet de faciliter l'introduction de l'extrémité 4 dans le passage 201 du moyen de retenue 2. La partie de guidage 401 peut également présenter des protubérances 401g destinées à coopérer avec la partie de guidage 201g du passage 201. Cela améliore le guidage de l'extrémité 4 dans le passage 201.

L'extrémité 4 peut également présenter une partie 403 de sertissage, destinée à retenir le câble. L'extrémité 4 est de préférence en métal, par exemple à base d'alliage de zinc/aluminium/magnésium/cuivre communément appelé Zamak.

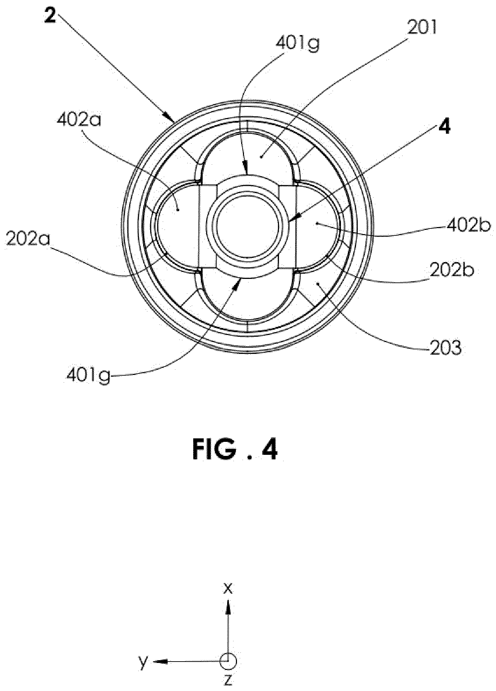

La figure 4 illustre en vue de dessus une extrémité 4 mise en place au sein du moyen de retenue 2. Les parties 402a, 402b de l'élément en saillie sont respectivement logées dans les parties 202a, 202b de la gorge de retenue. La fente 201 et les protubérances 401g de la partie de guidage sont également visibles.

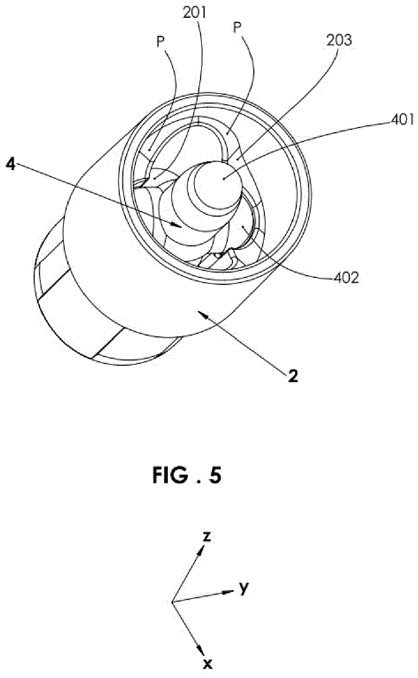

La figure 5 illustre également l'extrémité 4 mise en place au sein du moyen de retenue 2, selon une vue en perspective. La pente P des bords 203 et la partie de guidage 401 sont ici plus clairement visibles.

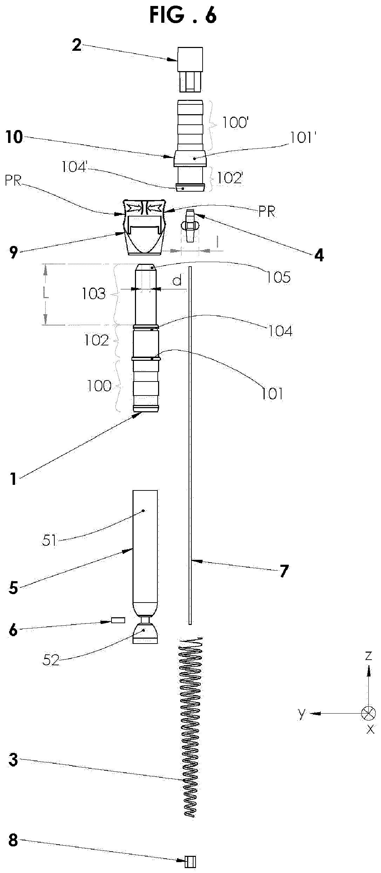

La figure 6 illustre en vue éclatée un dispositif d'assemblage selon un mode de réalisation de la présente invention. Ce dispositif comprend de préférence les éléments suivants :
- Un premier manchon 1 destiné à être fixé dans un premier tube. Ce premier manchon 1, de forme générale cylindrique, est creux et comprend un passage longitudinal dans lequel peut coulisser le câble 7. Ce manchon 1 comprend typiquement une partie 100 de liaison présentant des rainures transverses. La partie 100 peut ainsi être insérée et collée dans le premier tube. Le premier tube peut venir en butée contre une bague 101 délimitant la partie 100 de liaison du premier manchon 1. Le manchon 1 peut également comprendre une partie 102 de bride et une partie 103 d'insertion. La partie 102 est typiquement destinée à recevoir la bride 9. Elle peut présenter une rainure de fixation 104 permettant de maintenir la bride 9. D'autres moyens de fixation de la bride 9 sont également possibles. La partie 103 présente une forme générale cylindrique avec une extrémité 105 biseautée. Cette partie 103 d'insertion est configurée pour s'insérer dans le deuxième manchon 10. Elle présente une longueur L selon z typiquement comprise entre 3 cm et 6 cm, par exemple de l'ordre de 45 mm. Cela permet d'obtenir une résistance mécanique suffisante pour l'assemblage des deux brins. L'extrémité biseautée 105 permet de faciliter l'insertion du premier manchon 1 dans le deuxième manchon 10. L'extrémité biseautée 105 présente de préférence un diamètre interne d inférieur à la dimension en largeur l de l'extrémité 4. Cela permet d'éviter que l'extrémité 4 ne rentre dans le premier manchon. Le câble 7 est ainsi retenu au niveau de l'extrémité biseautée 105 par l'extrémité de câble 4.

Le premier manchon 1 peut être à base de matière plastique ou d'alliage métallique, de préférence à base d'alliage d'aluminium 7075. Il est typiquement formé par décolletage ou moulage.
- Un deuxième manchon 10 destiné à être fixé dans un deuxième tube. Ce deuxième manchon 10, de forme générale cylindrique, comprend une cavité configurée pour accueillir la partie d'insertion 103 du premier manchon 1. Ce deuxième manchon 10 comprend typiquement un passage longitudinal pour l'extrémité 4, ledit passage longitudinal débouchant dans le moyen de retenue 2. Le moyen de retenue 2 peut être logé directement au sein du deuxième manchon 10 ou, de façon préférée, reporté sur le deuxième manchon 10 comme illustré sur la figure 6.

Ce manchon 1 comprend également typiquement une partie 100' de liaison présentant des rainures transverses. La partie 100' peut ainsi être insérée et collée dans le deuxième tube. Le deuxième tube peut venir en butée contre une bague 101' délimitant la partie 100' de liaison du deuxième manchon 10. Le manchon 10 peut également comprendre une partie 102' de bride destinée à coopérer avec la bride 9. En particulier cette partie de bride 102' peut comprendre un débord 104' sur lequel vient prendre appui la bride 9 en position d'assemblage. Comme le premier manchon, le deuxième manchon 10 peut être à base de matière plastique ou d'alliage métallique, de préférence à base d'alliage d'aluminium 7075. Il est typiquement formé par décolletage ou moulage.
- Une bride 9, de préférence déformable au niveau des zones de préhension PR, destinée à être fixée sur l'un des manchons, par exemple le premier manchon 1 dans l'exemple illustré, et à retenir l'autre manchon, par exemple le deuxième manchon 10 dans l'exemple illustré. De façon préférée, cette bride 9 comprend au moins un ergot, par exemple deux ergots répartis de façon diamétralement opposés, configuré pour prendre appui sur le débord 104'. Dans l'exemple illustré, la bride 9 peut être déformée par pression latérale sur les zones de préhension PR de façon à libérer l'appui entre les ergots et le débord 104'. Cela permet à l'utilisateur d'effectuer un déverrouillage rapide du dispositif d'assemblage. La bride 9 peut présenter une forme ovale en projection selon z, avec un grand axe passant par les zones de préhension PR. Cela augmente l'amplitude de déformation. D'autres systèmes de bride et/ou de verrouillage sont envisageables, par exemple via un quart de tour.
- Un moyen de retenue 2 tel que décrit précédemment, venant typiquement s'emboîter dans la partie 100' du deuxième manchon 10.
- Un câble 7, typiquement à base d'inox, et de diamètre de l'ordre de 1,5 mm.
- Une première extrémité 8 destinée à être sertie d'un côté du câble 7. Cette première extrémité 8 est configurée pour prendre appui contre le moyen élastique tel qu'un ressort 3.
- Une deuxième extrémité 4 telle que décrite précédemment. Cette extrémité 4 est typiquement sertie au bout du câble 7, au niveau de la partie de sertissage 403.
- Un moyen élastique, tel qu'un ressort 3, configuré pour retenir élastiquement le câble 7 vis-à-vis du premier manchon 1. Le ressort 3 est de préférence un ressort en compression. Le ressort 3 est de préférence tronconique, de façon à présenter une force de rappel longitudinale progressive. La base la plus large du ressort 3 vient ainsi en appui contre la partie de liaison 100 du premier manchon 1, et la base la plus étroite vient en appui contre la première extrémité 8. Le dispositif est configuré de sorte que lorsque le câble 7 est tiré dans un premier sens, tendant à éloigner la deuxième extrémité 4 du premier manchon, la première extrémité 8 du câble 7 prend appui, directement ou par l'intermédiaire d'autres pièces, sur le ressort 3. La première extrémité 8 comprime alors le ressort 3 qui exerce un effort de rappel tendant à ramener la première extrémité 8 et donc l'ensemble du câble dans une position de repos.
- De façon préférée mais optionnelle uniquement, une mousse de protection 5 et un lien 6. La mousse de protection 5 comprend typiquement une partie 51 destinée à ensacher au moins partiellement le ressort 3, et une partie 52 destinée à ensacher au moins partiellement la première extrémité 8. Cela permet de protéger la paroi interne du premier tube vis-à-vis des frottements avec le ressort 3 et/ou l'extrémité 8. Une telle protection est avantageuse lorsque le tube est en carbone. D'autres types de protection 5 peuvent être envisagés, pas nécessairement sous forme de mousse.

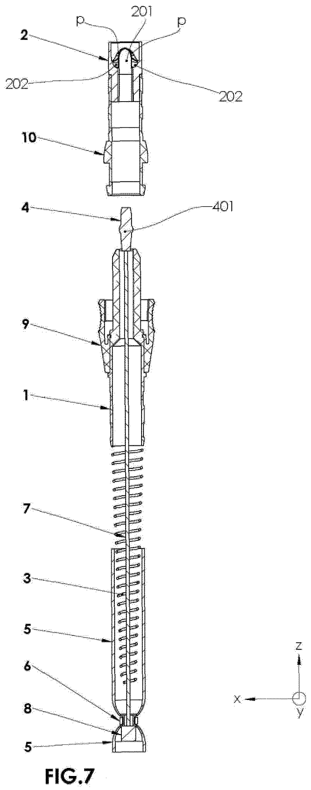

La figure 7 illustre le dispositif d'assemblage dans une position de démontage. La coopération entre les différents éléments décrits ci-dessus est clairement visible. Dans cette position de démontage, les premier et deuxième manchons 1, 10 ne sont pas solidaires l'un de l'autre. L'extrémité 4 est désengagée du moyen de retenue 2.

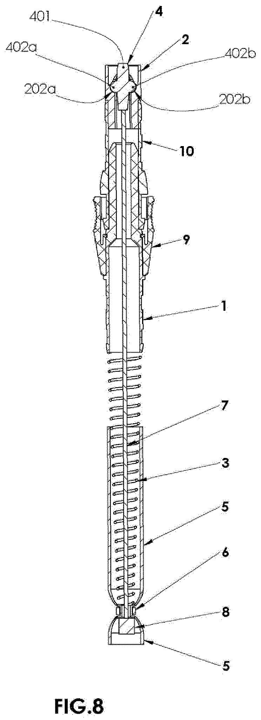

La figure 8 illustre le dispositif d'assemblage dans une position d'assemblage. La coopération entre les différents éléments décrits ci-dessus est clairement visible. Dans cette position d'assemblage, les premier et deuxième manchons 1, 10 sont emboités longitudinalement l'un dans l'autre et retenus par la bride 9. L'extrémité 4 est engagée dans le moyen de retenue 2. Les éléments en saillie 402a, 402b sont en appui dans le fond de la gorge de retenue 202a, 202b.

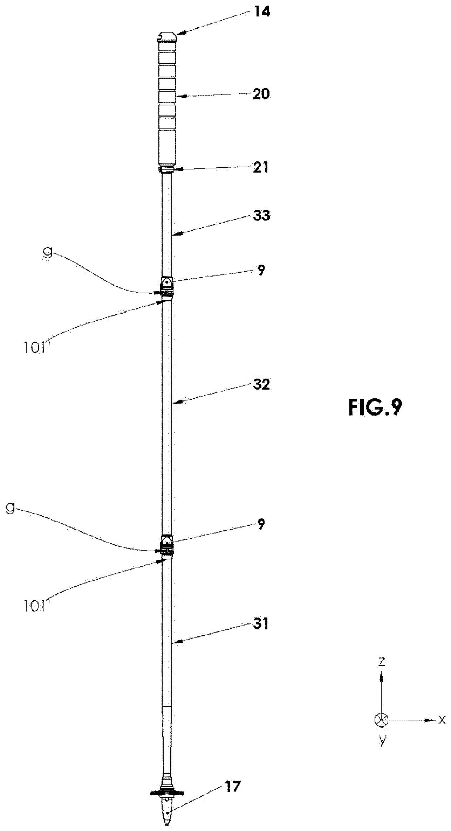

La figure 9 illustre un bâton de randonnée équipée de dispositifs d'assemblage tels que décrits précédemment. Dans l'exemple illustré, le bâton de randonnée comprend trois brins 31, 32, 33. Les premier et deuxième brins 31, 32 sont assemblés entre eux via un premier dispositif d'assemblage. Les deuxième et troisième brins 32, 33 sont assemblés entre eux via un deuxième dispositif d'assemblage sensiblement identique au premier dispositif d'assemblage. Le premier brin 31 comprend une pointe 17 destinée à venir en contact avec le sol. La section du brin 31 peut typiquement diminuer progressivement du côté de la pointe 17. Le brin 32 correspond à une partie médiane du bâton de randonnée. Le brin 33 est typiquement équipé d'une poignée 20, d'une boucle de dragonne 14, et d'un élastique de rangement 21. L'élastique de rangement 21 permet de maintenir les brins entre eux dans une position repliée du bâton. Le brin 31, qui est le plus susceptible de choc avec des obstacles au sol, par exemple des pierres, est également celui qui présente une moindre résistance mécanique du faite de sa section plus fine. Le brin 31 est donc celui présentant le plus grand risque de casse. Avantageusement, grâce au dispositif d'assemblage selon la présente invention, ce brin 31 peut être facilement remplacé, par exemple en cas de casse. Le brin 32 peut être également facilement démonté du brin 33 par le deuxième dispositif d'assemblage. Cela permet par exemple à l'utilisateur de facilement personnaliser le bâton de randonnée. Dans l'exemple illustré de dispositifs d'assemblage équipe le bâton de randonnée. D'autres configurations sont naturellement possibles, par exemple avec deux brins et un dispositif d'assemblage, avec trois brins et un seul dispositif d'assemblage en position basse, ou encore avec trois brins et un seul dispositif d'assemblage en position haute.

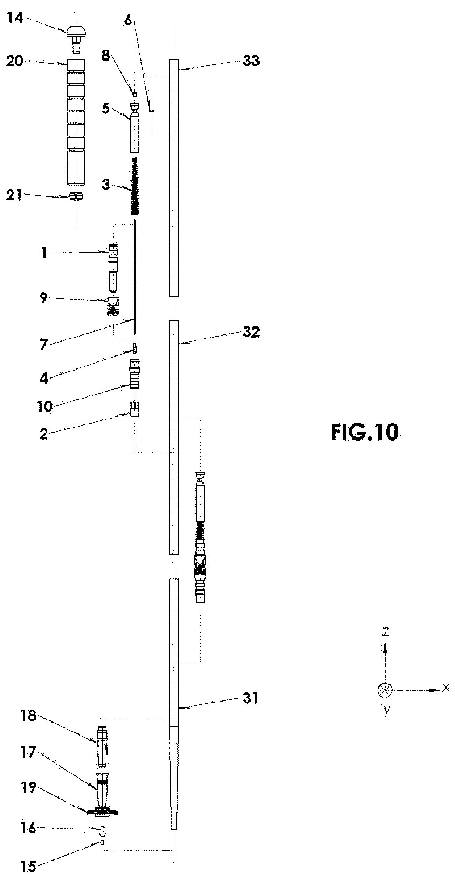

La figure 10 illustre en vue éclatée l'ensemble des éléments du bâton de randonnée comprenant les trois brins 31, 32, 33, la pointe 17 et son support de pointe 18, la rondelle 19, et l'extrémité de pointe 16 notamment. Les deux dispositifs d'assemblage, l'un en vue éclatée en position haute, l'autre en vue assemblée en position basse, ainsi que la poignée 20 sont également visibles.

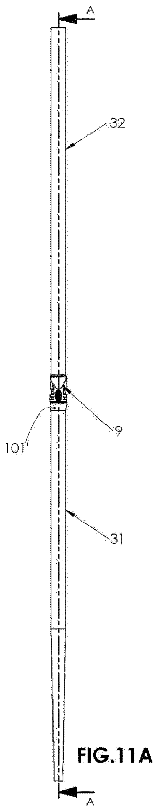

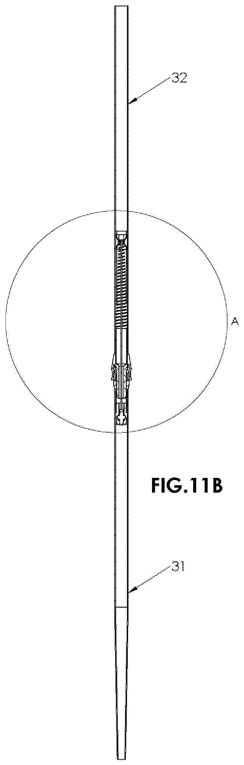

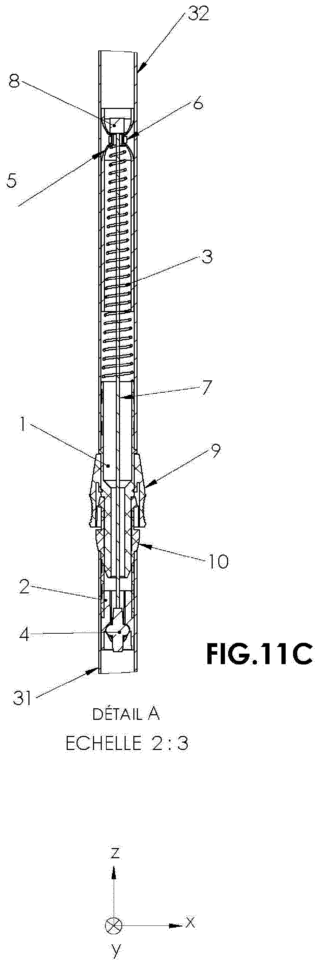

Les figures 11A à 11C illustrent selon différents grossissements deux brins d'un bâton de randonnée assemblé via un dispositif d'assemblage. La figure 11A est une vue générale des deux brins ainsi assemblés. Seule la bride 9 et la bague 101' sont visibles à la jonction des deux brins 31, 32 dans cette position d'assemblage. La figure 11B est une vue en coupe montrant l'insertion du dispositif d'assemblage au sein de chacun des deux brins 31, 32. La figure 11C est une vue détaillée du dispositif d'assemblage inséré dans les brins 31, 32.

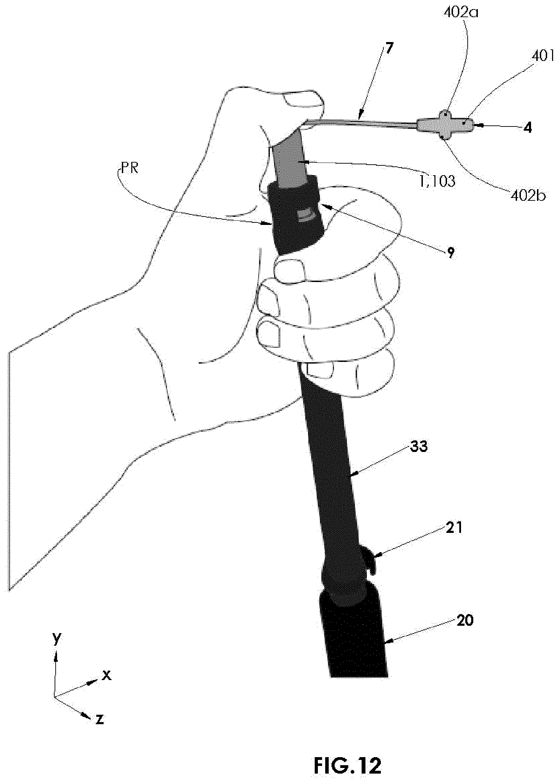

La figure 12 illustre une étape du procédé de démontage ou de montage d'un dispositif d'assemblage tel que décrit précédemment. Sur la figure 12, l'utilisateur maintient manuellement le brin 33 et bloque avec son pouce le câble 7 contre l'extrémité biseautée 105 du manchon 1. Il peut ainsi facilement manipuler avec son autre main le brin 32 de façon à présenter le passage 201 face à l'extrémité 4. Ce procédé ne nécessite avantageusement aucun outil pour être réalisé.

Lors du montage, tout en maintenant le câble 7 bloqué, l'utilisateur peut insérer l'extrémité 4 dans le moyen de retenue 2 logé dans le brin 32 (non illustré), puis, en effectuant une rotation d'un quart de tour du brin 32 autour de son axe longitudinal, et en lâchant progressivement le câble 7 il peut engager l'extrémité 4 dans la gorge de retenue du moyen de retenue. Pour assembler le bâton, il suffit ensuite de présenter le brin 32 bout-à-bout avec le brin 33. Le ressort et la partie d'insertion 103 permette d'assister la mise en place des deux brins bout-à-bout. Un effort de rapprochement longitudinal permet d'emboîter les deux brins. La bride 9 déformable se déforme lors de l'emboîtement et verrouille l'assemblage. Pour plier le bâton, il suffit de maintenir les deux brins côte à côte. Ceux-ci sont liés par le câble 7 qui est maintenu sous tension par le ressort.

L'opération de démontage s'effectue à l'inverse de l'opération de montage. L'utilisateur déverrouille la bride 9 en pressant latéralement sur les zones de préhension PR, puis tire sur chacun des brins de façon à déboîter les deux manchons. Il peut ensuite former un angle sensiblement à 90° avec les deux brins, bloquer le câble 7 avec le pouce, opérer une petite translation du brin 32 le long du câble 7 de façon à désengager l'extrémité 4 de la gorge de retenue, effectuer un quart de tour du brin 32 de façon à présenter les éléments en saillie 402a, 402b face à la fente, et sortir le brin 32. Toutes les étapes de montage ou de démontage peuvent être effectuées manuellement, c'est-à-dire sans outil.

Le dispositif d'assemblage selon l'invention est ainsi particulièrement versatile et permet de solidariser de façon fiable deux tubes en vue de les assembler ou de les plier. Ce dispositif d'assemblage est avantageusement facilement démontable.

D'autres applications peuvent être envisagées. L'invention n'est pas limitée aux modes de réalisation précédemment décrits. En particulier, différentes formes complémentaires entre la deuxième extrémité et le moyen de retenue peuvent être envisagées. Par exemple, une deuxième extrémité formant une boucle ou une rondelle, venant se fixer sur un moyen de retenue sous forme de crochet, peuvent également convenir. D'autres formes complémentaires pourront naturellement être mises en oeuvre par l'homme du métier, sans se départir du principe décrit dans cette demande et défini dans les revendications.

## Revendications

1. Dispositif d'assemblage comprenant :
- un premier manchon (1) destiné à équiper un premier tube (32), et un deuxième manchon (10) destiné à équiper un deuxième tube (31), lesdits premier et deuxième manchons (1, 10) étant configurés pour coopérer par emboitement selon un axe longitudinal (z),
- une bride (9) montée sur l'un des premier et deuxième manchons (1, 10), et configurée pour
• retenir l'autre des premier et deuxième manchons en translation selon l'axe longitudinal (z), dans une position d'assemblage,
• libérer l'autre des premier et deuxième manchons (1, 10) dans une position de désassemblage, ladite position de désassemblage étant obtenue en exerçant un effort sur un pourtour de la bride,
- un moyen élastique (3) prenant appui contre le premier manchon (1) et configuré pour exercer un effort de rappel selon l'axe longitudinal,
- un câble (7) monté coulissant vis-à-vis du premier manchon (1) et présentant une première extrémité (8) retenue par ledit moyen élastique (3), ledit câble (7) présentant une deuxième extrémité (4) destinée à être retenue par un moyen de retenue (2) du deuxième manchon (10),
le dispositif étant **caractérisé en ce que** la deuxième extrémité (4) du câble (7) et le moyen de retenue (2) présentent des formes complémentaires de sorte que :
- dans une position de montage, la deuxième extrémité (4) du câble (7) est engagée dans le moyen de retenue (2) et en prise avec le moyen de retenue (2), le moyen de retenue (2) formant une butée pour la deuxième extrémité (4) selon l'axe longitudinal (z) permettant au moyen élastique (3) d'exercer ledit effort de rappel, de sorte que les premier et deuxième manchons (1, 10) soient liés l'un à l'autre par le câble (7),
- dans une position de démontage, la deuxième extrémité (4) du câble (7) est désengagée du moyen de retenue (2) et libre vis-à-vis du moyen de retenue (2), de sorte que les premier et deuxième manchons (1, 10) ne soient plus liés l'un à l'autre par le câble (7),
et **en ce que** l'engagement et le désengagement dans les positions respectives de montage et de démontage se font manuellement.

2. Dispositif selon la revendication précédente dans lequel la deuxième extrémité (4) du câble (7) comprend au moins un élément en saillie (402, 402a, 402b) selon une direction transverse à l'axe longitudinal (z), ledit élément (402, 402a, 402b) étant destiné à coopérer avec le moyen de retenue (2), et dans lequel le moyen de retenue (2) du deuxième manchon (10) comprend un passage (201) pour l'élément en saillie (402, 402a, 402b), et une gorge de retenue (202, 202a, 202b) configurée pour retenir ledit élément (402, 402a, 402b).

3. Dispositif selon la revendication précédente dans lequel la deuxième extrémité (4) du câble (7) comprend une partie de guidage (401) distale vis-à-vis de la première extrémité (8), ladite partie de guidage (401) étant configurée pour guider la deuxième extrémité (4) au travers du passage (201) du moyen de retenue (2).

4. Dispositif selon l'une quelconque des deux revendications précédentes dans lequel l'élément en saillie (402, 402a, 402b) est configuré pour passer dans le passage (201) par translation selon l'axe longitudinal (z), et pour être retenu dans la gorge de retenue (202, 202a, 202b) par rotation, de préférence par rotation d'un quart de tour, autour de l'axe longitudinal (z).

5. Dispositif selon l'une quelconque des revendications 2 à 4 dans lequel l'élément en saillie (402, 402a, 402b) présente au moins un et de préférence au moins deux ergots (402a, 402b), de préférence cylindriques, de part et d'autre du câble (7), et la gorge de retenue (202) présente une forme complémentaire auxdits ergots (402a, 402b).

6. Dispositif selon l'une quelconque des revendications 2 à 5 dans lequel le passage (201) du moyen de retenue (2) est centré vis-à-vis du deuxième manchon (10), en projection dans un plan transverse (xy) à l'axe longitudinal (z).

7. Dispositif selon l'une quelconque des revendications précédentes dans lequel le moyen de retenue (2) est un embout à base de plastique rapporté sur le deuxième manchon (10) sur une partie de liaison (100') du deuxième manchon (10).

8. Dispositif selon l'une quelconque des revendications 2 à 7 dans lequel le moyen de retenue (2) comprend au moins un bord (203) présentant une pente (P) de guidage configurée pour guider l'élément en saillie (402) au fond de la gorge (202).

9. Dispositif selon l'une quelconque des revendications 2 à 8 dans lequel la gorge de retenue (202) présente une hauteur hg supérieure à au moins la moitié d'une hauteur hs de l'élément en saille (402), les hauteurs hg et hs étant prises selon l'axe longitudinal (z).

10. Bâton de randonnée comprenant au moins un premier tube (32) et un deuxième tube (31), et un dispositif d'assemblage selon l'une quelconque des revendications précédentes.

11. Bâton de randonnée selon la revendication précédente dans lequel les premier et deuxième tubes (32, 31) sont à base de carbone.

12. Procédé de démontage d'un dispositif d'assemblage selon l'une quelconque des revendications 2 à 9, comprenant :
- exercer un effort, par exemple une pression manuelle, sur le pourtour de la bride (9),
- exercer une traction selon l'axe longitudinal (z) pour déboiter les premier et deuxième manchons (1, 10), l'élément en saillie (402) étant retenu dans la gorge de retenue (202),
- bloquer le câble (7) vis-à-vis du deuxième manchon (10),
- effectuer une translation du deuxième manchon (10) en direction du premier manchon (1), le long du câble (7), de sorte à désengager l'élément en saillie (402) de la gorge de retenue (202),
- effectuer une rotation du deuxième manchon (10) relativement au câble (7), de sorte à aligner l'élément en saillie (402) avec le passage (201) du moyen de retenue (2),
- effectuer une translation du deuxième manchon (10) dans une direction opposée au premier manchon (1), le long du câble (7), de sorte à désengager l'élément en saillie (402) du moyen de retenue (2) et à désolidariser les premier et deuxième manchons (1, 10).

13. Procédé de démontage selon la revendication précédente dans lequel le blocage du câble (7) est effectué manuellement, en tenant le premier manchon (1) et en pinçant le câble (7) contre un bord du premier manchon (1), avec un doigt, de préférence un pouce.

14. Procédé de démontage selon l'une quelconque des deux revendications précédentes dans lequel la rotation est effectuée sur un quart de tour.

15. Procédé de montage d'un dispositif d'assemblage selon l'une quelconque des revendications 2 à 9, comprenant :
- exercer une traction sur la deuxième extrémité du câble et bloquer le câble contre le premier manchon,
- mettre en regard le deuxième manchon avec la deuxième extrémité du câble,
- effectuer une translation du deuxième manchon en direction du premier manchon, le long du câble, de sorte à engager l'élément en saillie dans le passage du moyen de retenue,
- effectuer une rotation du deuxième manchon relativement au câble, de sorte à aligner l'élément en saillie avec la gorge de retenue,
- débloquer le câble,
- emboiter selon l'axe longitudinal les premier et deuxième manchons, l'élément en saillie étant retenu dans la gorge de retenue,
- verrouiller la bride.

## Patentansprüche

1. Montagevorrichtung, die Folgendes umfasst:
- eine erste Muffe (1), die dazu bestimmt ist, ein erstes Rohr (32) auszurüsten, und eine zweite Muffe (10), die dazu bestimmt ist, ein zweites Rohr (31) auszurüsten, wobei die erste und die zweite Muffe (1, 10) dazu konfiguriert sind, durch Ineinandergreifen entlang einer Längsachse (z) zusammenzuwirken,
- einen Flansch (9), der an einer der ersten und der zweiten Muffe (1, 10) montiert und dazu konfiguriert ist,
• die andere der ersten und der zweiten Muffe entlang der Längsachse (z) in einer Montageposition translatorisch zu halten,
• die andere der ersten und der zweiten Muffe (1, 10) in einer Demontageposition freizugeben, wobei die Demontageposition durch Ausüben einer Kraft auf einen Rand des Flansches erhalten wird,
- ein elastisches Mittel (3), das abstützend an der ersten Muffe (1) anliegt und dazu konfiguriert ist, eine Rückstellkraft entlang der Längsachse auszuüben,
- ein Seil (7), das gleitend gegenüber der ersten Muffe (1) montiert ist und ein erstes Ende (8) aufweist, das von dem elastischen Mittel (3) gehalten wird, wobei das Seil (7) ein zweites Ende (4) aufweist, das dazu bestimmt ist, von einem Haltemittel (2) der zweiten Muffe (10) gehalten zu werden,
wobei die Vorrichtung **dadurch gekennzeichnet ist, dass** das zweite Ende (4) des Seils (7) und das Haltemittel (2) komplementäre Formen aufweisen, so dass:
- in einer Montageposition das zweite Ende (4) des Seils (7) in das Haltemittel (2) eingreift und mit dem Haltemittel (2) in Eingriff steht, wobei das Haltemittel (2) einen Anschlag für das zweite Ende (4) entlang der Längsachse (z) bildet, wodurch dem elastischen Mittel (3) ermöglicht wird, die Rückstellkraft auszuüben, so dass die erste und die zweite Muffe (1, 10) durch das Seil (7) miteinander verbunden sind,
- in einer Demontageposition das zweite Ende (4) des Seils (7) aus dem Haltemittel (2) gelöst und gegenüber dem Haltemittel (2) frei ist, so dass die erste und die zweite Muffe (1, 10) nicht mehr durch das Seil (7) miteinander verbunden sind,
und dadurch, dass das Eingreifen und Lösen in den jeweiligen Montage- und Demontagepositionen manuell erfolgt.

2. Vorrichtung nach dem vorhergehenden Anspruch, wobei das zweite Ende (4) des Seils (7) mindestens ein in einer Richtung quer zur Längsachse (z) vorspringendes Element (402, 402a, 402b) umfasst, wobei das Element (402, 402a, 402b) dazu bestimmt ist, mit dem Haltemittel (2) zusammenzuwirken, und wobei das Haltemittel (2) der zweiten Muffe (10) einen Durchgang (201) für das vorspringende Element (402, 402a, 402b) und eine Haltenut (202, 202a, 202b) umfasst, die dazu konfiguriert ist, das Element (402, 402a, 402b) zu halten.

3. Vorrichtung nach dem vorhergehenden Anspruch, wobei das zweite Ende (4) des Seils (7) einen Führungsteil (401) distal gegenüber dem ersten Ende (8) umfasst, wobei der Führungsteil (401) dazu konfiguriert ist, das zweite Ende (4) durch den Durchgang (201) des Haltemittels (2) zu führen.

4. Vorrichtung nach einem der beiden vorhergehenden Ansprüche, wobei das vorspringende Element (402, 402a, 402b) dazu konfiguriert ist, durch Translation entlang der Längsachse (z) in den Durchgang (201) zu gelangen und durch Drehung, vorzugsweise durch Drehung um eine Viertelumdrehung, um die Längsachse (z) in der Haltenut (202, 202a, 202b) gehalten zu werden.

5. Vorrichtung nach einem der Ansprüche 2 bis 4, wobei das vorspringende Element (402, 402a, 402b) auf beiden Seiten des Seils (7) mindestens einen und vorzugsweise mindestens zwei, vorzugsweise zylindrische, Vorsprünge (402a, 402b) aufweist, und die Haltenut (202) eine zu den Vorsprüngen (402a, 402b) komplementäre Form aufweist.

6. Vorrichtung nach einem der Ansprüche 2 bis 5, wobei der Durchgang (201) des Haltemittels (2) gegenüber der zweiten Muffe (10) in der Projektion in einer Querebene (xy) zur Längsachse (z) zentriert ist.

7. Vorrichtung nach einem der vorhergehenden Ansprüche, wobei das Haltemittel (2) ein Endstück auf Kunststoffbasis ist, das an einem Verbindungsteil (100') der zweiten Muffe (10) an der zweiten Muffe (10) befestigt ist.

8. Vorrichtung nach einem der Ansprüche 2 bis 7, wobei das Haltemittel (2) mindestens eine Kante (203) umfasst, die eine Führungsschräge (P) aufweist, die dazu konfiguriert ist, das vorspringende Element (402) am Boden der Nut (202) zu führen.

9. Vorrichtung nach einem der Ansprüche 2 bis 8, wobei die Haltenut (202) eine Höhe hg aufweist, die mindestens um die Hälfte größer ist als eine Höhe hs des vorspringenden Elements (402), wobei die Höhen hg und hs entlang der Längsachse (z) genommen werden.

10. Wanderstock, der mindestens ein erstes Rohr (32) und ein zweites Rohr (31) sowie eine Montagevorrichtung nach einem der vorhergehenden Ansprüche umfasst.

11. Wanderstock nach dem vorhergehenden Anspruch, wobei das erste und das zweite Rohr (32, 31) auf Kohlenstoffbasis hergestellt sind.

12. Verfahren zum Demontieren einer Montagevorrichtung nach einem der Ansprüche 2 bis 9, das Folgendes umfasst:
- Ausüben einer Kraft, zum Beispiel eines manuellen Drucks, auf den Rand des Flansches (9),
- Ausüben einen Zugkraft entlang der Längsachse (z), um die erste und die zweite Muffe (1, 10) voneinander zu trennen, wobei das vorspringende Element (402) in der Haltenut (202) gehalten wird,
- Blockieren des Seils (7) gegenüber der zweiten Muffe (10),
- Ausführen einer Translation der zweiten Muffe (10) entlang des Seils (7) in Richtung der ersten Muffe (1), um das vorspringende Element (402) aus der Haltenut (202) zu lösen,
- Ausführen einer Drehung der zweiten Muffe (10) relativ zum Seil (7), um das vorspringende Element (402) mit dem Durchgang (201) des Haltemittels (2) auszurichten,
- Ausführen einer Drehung der zweiten Muffe (10) entlang des Seils (7) in eine zur ersten Muffe (1) entgegengesetzte Richtung, um das vorspringende Element (402) von dem Haltemittel (2) zu lösen und die erste und die zweite Muffe (1, 10) zu entkoppeln.

13. Demontageverfahren nach dem vorhergehenden Anspruch, wobei das Blockieren des Seils (7) manuell ausgeführt wird, indem die erste Muffe (1) festgehalten und das Seil (7) gegen eine Kante der ersten Muffe (1) mit einem Finger, vorzugsweise einem Daumen, gedrückt wird.

14. Demontageverfahren nach einem der beiden vorhergehenden Ansprüche, wobei die Drehung über eine Viertelumdrehung ausgeführt wird.

15. Verfahren zum Montieren einer Montagevorrichtung nach einem der Ansprüche 2 bis 9, das Folgendes umfasst:
- Ausüben einer Zugkraft auf das zweite Ende des Seils und Blockieren des Seils gegen die erste Muffe,
- Gegenüberstellen der zweiten Muffe mit dem zweiten Ende des Seils,
- Ausführen einer Translation der zweiten Muffe entlang des Seils in Richtung der ersten Muffe, um das vorspringende Element in den Durchgang des Haltemittels einzugreifen,
- Ausführen einer Drehung der zweiten Muffe relativ zum Seil, um das vorspringende Element mit der Haltenut auszurichten,
- Freigeben des Seils,
- Ineinanderfügen der ersten und der zweiten Muffe entlang der Längsachse, wobei das vorspringende Element in der Haltenut gehalten wird,
- Verriegeln des Flansches.

## Claims

1. An assembly device comprising:
- a first sleeve (1) intended to equip a first tube (32), and a second sleeve (10) intended to equip a second tube (31), said first and second sleeves (1, 10) being configured to cooperate by interlocking along a longitudinal axis (z),
- a flange (9) mounted on one of the first and second sleeves (1, 10), and configured to
• retain the other of the first and second sleeves in translation along the longitudinal axis (z), in an assembly position,
• release the other of the first and second sleeves (1, 10) in a disassembly position, said disassembly position being obtained by exerting a force on a periphery of the flange,
- elastic means (3) bearing against the first sleeve (1) and configured to exert a return force along the longitudinal axis,
- a cable (7) which is slidably mounted relative to the first sleeve (1) and having a first end (8) retained by said elastic means (3), said cable (7) having a second end (4) intended to be retained by retaining means (2) of the second sleeve (10),
the device being **characterised in that** the second end (4) of the cable (7) and the retaining means (2) have complementary shapes such that:
- in a mounting position, the second end (4) of the cable (7) is engaged in the retaining means (2) and engaged with the retaining means (2), the retaining means (2) forming a stop for the second end (4) along the longitudinal axis (z) allowing the elastic means (3) to exert said return force, such that the first and second sleeves (1, 10) are linked to each other by the cable (7),
- in a dismounting position, the second end (4) of the cable (7) is disengaged from the retaining means (2) and free relative to the retaining means (2), such that the first and second sleeves (1, 10) are no longer linked to each other by the cable (7),
and **in that** the engagement and disengagement in the respective mounting and dismounting positions are done manually.

2. The device according to the preceding claim, wherein the second end (4) of the cable (7) comprises at least one protruding element (402, 402a, 402b) in a direction transverse to the longitudinal axis (z), said element (402 402a, 402b) being intended to cooperate with the retaining means (2), and wherein the retaining means (2) of the second sleeve (10) comprises a passage (201) for the protruding element (402, 402a, 402b), and a retaining groove (202, 202a, 202b) configured to retain said element (402, 402a, 402b).

3. The device according to the preceding claim, wherein the second end (4) of the cable (7) comprises a guide portion (401) distal to the first end (8), said guide portion (401) being configured to guide the second end (4) through the passage (201) of the retaining means (2).

4. The device according to any one of the two preceding claims, wherein the protruding element (402, 402a, 402b) is configured to pass into the passage (201) by translation along the longitudinal axis (z), and to be retained in the retaining groove (202, 202a, 202b) by rotation, preferably by rotation of a quarter turn, about the longitudinal axis (z) .

5. The device according to any one of claims 2 to 4, wherein the protruding element (402, 402a, 402b) has at least one and preferably at least two lugs (402a, 402b), preferably cylindrical lugs, on either side of the cable (7), and the retaining groove (202) has a shape complementary to said lugs (402a, 402b).

6. The device according to any one of claims 2 to 5, wherein the passage (201) of the retaining means (2) is centred vis-à-vis the second sleeve (10), in projection in a plane (xy) transverse to the longitudinal axis (z).

7. The device according to any one of the preceding claims, wherein the retaining means (2) is a plastic-based end piece which is directly mounted on the second sleeve (10) on a connecting portion (100') of the second sleeve (10).

8. The device according to any one of claims 2 to 7, wherein the retaining means (2) comprises at least one edge (203) having a guide slope (P) configured to guide the protruding element (402) at the bottom of the groove (202) .

9. The device according to any one of claims 2 to 8, wherein the retaining groove (202) has a height hg which is greater than at least half of a height hs of the protruding element (402), the heights hg and hs being taken along the longitudinal axis (z).

10. A hiking pole comprising at least one first tube (32) and one second tube (31), and an assembly device according to any one of the preceding claims.

11. The hiking pole according to the preceding claim, wherein the first and second tubes (32, 31) are carbon-based.

12. A method for dismounting an assembly device according to any one of claims 2 to 9, comprising:
- exerting a force, for example a manual pressure, on the periphery of the flange (9),
- exerting a traction along the longitudinal axis (z) to disengage the first and second sleeves (1, 10), the protruding element (402) being retained in the retaining groove (202),
- blocking the cable (7) relative to the second sleeve (10),
- performing a translation of the second sleeve (10) towards the first sleeve (1), along the cable (7), so as to disengage the protruding element (402) from the retaining groove (202),
- performing a rotation of the second sleeve (10) relative to the cable (7), so as to align the protruding element (402) with the passage (201) of the retaining means (2),
- performing a translation of the second sleeve (10) in a direction opposite to the first sleeve (1), along the cable (7), so as to disengage the protruding element (402) from the retaining means (2) and to separate the first and second sleeves (1, 10).

13. A dismounting method according to the preceding claim, wherein the blocking of the cable (7) is performed manually, by holding the first sleeve (1) and pinching the cable (7) against an edge of the first sleeve (1), with a finger, preferably a thumb.

14. The dismounting method according to any one of the two preceding claims, wherein the rotation is performed over a quarter turn.

15. A method for mounting an assembly device according to any one of claims 2 to 9, comprising:
- exerting a traction on the second end of the cable and blocking the cable against the first sleeve,
- place the second sleeve opposite to the second end of the cable,
- performing a translation of the second sleeve in the direction of the first sleeve, along the cable, so as to engage the protruding element in the passage of the retaining means,
- performing a rotation of the second sleeve relative to the cable so as to align the protruding element with the retaining groove,
- unblocking the cable,
- interlocking the first and second sleeves along the longitudinal axis, the protruding element being retained in the retaining groove,
- locking the flange.
